# EUROPEAN PATENT SPECIFICATION

(11) **EP 1 410 643 B1**
(45) Date of publication and mention of the grant of the patent: **24.10.2007**
(21) Application number: 02749662.9
(22) Date of filing: 26.06.2002
(51) Int. Cl.: H04N 7/24

(54) **METHOD FOR STREAMING MEDIA WITH MULTIPLE DESCRIPTION BITSTREAMS**
VERFAHREN ZUM MEDIENSTREAMEN MIT BITSTRÖMEN MIT MEHREREN BESCHREIBUNGEN
PROCEDE DE TRANSMISSION MULTIMEDIA AUX CLIENTS FIXES OU MOBILES VIA DES TRAINS BINAIRES A DESCRIPTIONS MULTIPLES

(30) Priority: 03.07.2001 US 899622
(43) Date of publication of application: 21.04.2004
(73) Proprietor: Hewlett-Packard Company, Palo Alto, CA 94304-1112 (US)
(72) Inventor: APOSTOLOPOULOS, John, G., Palo Alto, CA 94303 (US); BASU, Sujoy, Mountain View, CA 94040 (US); CHEUNG, Gene, Suginami-ku, Tokyo 167-0054 (JP); KUMAR, Rajendra, Los Altos, CA 94024 (US); ROY, Sumit, Menlo Park, CA 94025 (US); TAN, Wai-Tan, Sunnyvale, CA 94087 (US); WEE, Susie, J., San Carlos, CA 94070 (US); WONG, Tina, Sunnyvale, CA 94089 (US); SHEN, Bo, Mountain View, CA 94041 (US)
(74) Representative: Schoppe, Fritz
(86) International application number: PCT/US2002/020230
(87) International publication number: WO 2003/005725

(56) References cited:
- WO-A-01/22735
- APOSTOLOPOULOS J G: "RELIABLE VIDEO COMMUNICATION OVER LOSSY PACKET NETWORKS USING MULTIPLE STATE ENCODING AND PATH DIVERSITY" PROCEEDINGS OF THE SPIE, SPIE, BELLINGHAM, VA, US, vol. 4310, 24 January 2001 (2001-01-24), pages 392-409, XP008007254

## Description

### TECHNICAL FIELD

The present claimed invention relates to the field of streaming media. More specifically, the present claimed invention relates to delivering streaming data to fixed clients and/or mobile clients using multiple description bitstreams and various forms of diversity.

### BACKGROUND ART

Today's networks, such as the Internet, are primarily designed for delivering static, non-real-time data to fixed clients such as desktop computers and laptops. Developing a system that delivers real-time streaming media to mobile clients presents an even greater series of challenges due to the streaming nature of the data and the mobility of the user. These challenges are intensified when considering issues such as system scalability, which extends service to a larger number of users; and quality-of-service and fault tolerance, which provides mobile users with continuous, uninterrupted streaming media sessions. Furthermore, this robust, uninterrupted media delivery session must be delivered over best-effort networks, which provide best effort, but non-guaranteed levels of service. A solution that overcomes these many challenges requires innovation throughout the end-to-end system.

Currently, multimedia applications such as video and audio communication over the Internet or wireless links are hampered by the limited bandwidth and losses (e.g. packet loss or bit errors) that afflict these error-prone environments. These multimedia applications require high compression and high error resilience, however simultaneously achieving these qualities is difficult because these are largely conflicting requirements.

Two important characteristics of a media communication system are reliability and efficiency. For the problem of streaming media from a wired infrastructure to a wireless mobile client, a sequence of operations is performed where each is a possible point of failure. The conventional approach to achieve reliability in such a system is by duplicating resources, e.g. "mirrored servers" or transmitting the same information twice. This approach can reduce the probability of certain failures by providing backups, however it is inefficient as it requires twice as many resources and is still susceptible to other single points of failure.

The following is a more specific example of a conventional approach to streaming media from a wired infrastructure to a wireless mobile client, and the problems associated therewith. Streaming media from a wired infrastructure to a mobile client involves operation of a sequence of modules. If all of these modules work properly, then the communication is successful. However, if any of these modules is faulty, then the entire communication is unsuccessful. For example, a typical communication may involve a server reading a media stream from storage, sending it over a wired network to a wireless base station, the wireless base station then transmits the stream over the wireless channel to the wireless client. This system involves the interaction of at least the following modules (1) storage, (2) server, (3) wired network, (4) wireless base station, (5) wireless transmission in wireless cells. If all of the modules work properly then the communication is successful, however if any module is faulty the communication is unsuccessful. In an effort to improve reliability system designers typically add redundancy to remove single point of failure. For example, two sets of any hardware may be used instead of one, e.g. two storage modules or two servers, which are "mirrored" to contain the same information. Similarly, the same information may be transmitted twice in the wired network. In addition, the wireless transmission, assuming CDMA and soft-handoff, typically involves two or more transmissions of the same information. In each of these conventional approaches, the improved reliability is achieved by duplicating the information and/or the resources.

While these conventional methods of duplication improve reliability, they are also inefficient because they use twice as many resources. In addition, this conventional approach may be ineffective if a single fault may afflict both duplicates. For example, if both storage modules (and/or both servers) are at the same location, a power outage or flood would render both of them useless. When the same information is transmitted twice in a wired network, the information typically proceeds along the same path in the network. Therefore, if that same path is congested or experiences an outage. then both duplicates of the information would be lost. To summarize, in an attempt to improve reliability the conventional approach is to duplicate information and resources. This conventional approach is inefficient because of the duplication, and is also ineffective because in many cases there can still exist single points of failure.

Although portions of the above-listed discussion specifically mention the shortcomings of prior art approaches with respect to the streaming of video data for simplified presentation, such shortcomings are not limited solely to the streaming of video data. Instead, the problems of the prior art span various types of media including, but not limited to, audio-based data, speech-based data, image-based data, graphic data, web page-based data, and the like. Moreover, streaming media typically shares the property that the media streams must be delivered with a relative time constraint and thus share the notion of a stream.

Thus, the need has arisen for a method and system for streaming media to fixed clients and/or mobile clients. A further need exists for a method and system for streaming media to fixed clients and/or mobile clients wherein the method and system provides increased reliability and efficiency over conventional systems.

Apostolopoulos, J. G describes in "RELIABLE VIDEO COMMUNICATION OVER LOSSY PACKET NETWORKS USING MULTIPLE STATE ENCODING AND PATH DIVERSITY" Proceedings of the SPIE, SPIE, Bellingham, VA, US, vol. 4310, 24 January 2001, pages 392-409, XP008007254, the transmission of video data via a lossy packet network from a source to a client. The video is coded into multiple independent decodeable streams so that if one stream is lost the other stream will still be decoded to produce usable video, wherein the respective streams are sent to the client or application via different paths through the lossy packet network.

WO 01 22735 A1 discloses a video communication system that uses multiple streams to carry digital video. The use of multiple streams ensures that errors in one or more of the multiple streams do not prevent reconstruction of remaining ones of the multiple streams. This enables an error free display of the digital video at a reduced frame rate during the loss of a subset of the streams. In addition, the multiple streams provide past and future frames that may be used to recover lost frames and thereby recover the lost stream.

It is the object of the present invention to provide a method for providing a client with access to multimedia data over a network with increased reliability and efficiency.

This object is achieved by a method according to claim 1.

### DISCLOSURE OF THE INVENTION

The present invention provides a method and system for streaming media to fixed clients and/or mobile clients. The present invention further provides a method and system for streaming media to fixed clients and/or mobile clients wherein the method and system provides increased reliability and efficiency over conventional systems.

Specifically, in one method embodiment, the present invention recites encoding media data to be streamed to a client into a first multiple description bitstream and into a second multiple description bitstream. The present embodiment then recites distributing the first and second multiple description bitstreams to a plurality of servers placed at intermediate nodes throughout a network such that a client is provided with access to the media data via a plurality of transmission paths.

These and other technical advantages of the present invention will no doubt become obvious to those of ordinary skill in the art after having read the following detailed description of the preferred embodiments which are illustrated in the various drawing figures.

### BRIEF DESCRIPTION OF THE DRAWINGS

The accompanying drawings, which are incorporated in and form a part of this specification, illustrate embodiments of the invention and, together with the description, serve to explain the principles of the invention:
FIGURE 1 is a schematic diagram of an exemplary computer system used to perform steps of the present method in accordance with various embodiments of the present claimed invention.
FIGURE 2 is a schematic diagram illustrating multiple description coding of media data as employed in accordance with various embodiments of the present claimed invention.
FIGURE 3A is a schematic diagram illustrating a mobile client system employed in accordance with various embodiments of the present claimed invention.
FIGURE 3B is a schematic diagram illustrating a fixed client system employed in accordance with various embodiments of the present claimed invention.
FIGURE 4 is a flow chart of steps performed in accordance with one embodiment of the present claimed invention.

The drawings referred to in this description should be understood as not being drawn to scale except if specifically noted.

### BEST MODES FOR CARRYING OUT THE INVENTION

Reference will now be made in detail to the preferred embodiments of the invention, examples of which are illustrated in the accompanying drawings. While the invention will be described in conjunction with the preferred embodiments, it will be understood that they are not intended to limit the invention to these embodiments.

Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, components, and circuits have not been described in detail as not to unnecessarily obscure aspects of the present invention.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "encoding", "transmitting", "storing", "distributing" or the like, refer to the actions and processes of a computer system, or similar electronic computing device. The computer system or similar electronic computing device manipulates and transforms data represented as physical (electronic) quantities within the computer system's registers and memories into other data similarly represented as physical quantities within the computer system memories or registers or other such information storage, transmission, or display devices. The present invention is also well suited to the use of other computer systems such as, for example, optical and mechanical computers.

### COMPUTER SYSTEM ENVIRONMENT OF THE PRESENT INVENTION

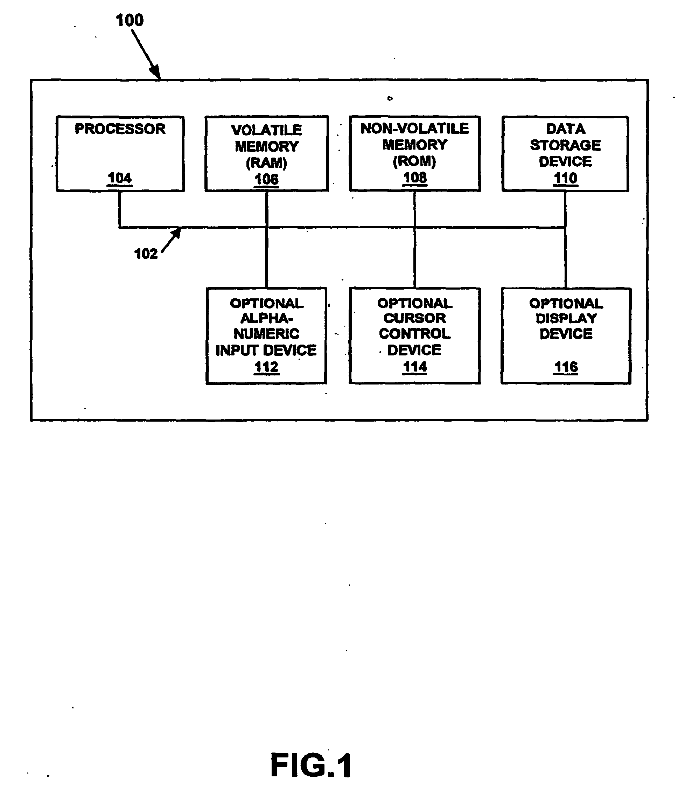

With reference now to Figure 1, portions of the present method and system are comprised of computer-readable and computer-executable instructions which reside, for example, in computer-usable media of a computer system. Figure 1 illustrates an exemplary computer system 100 used in accordance with one embodiment of the present invention. It is appreciated that system 100 of Figure 1 is exemplary only and that the present invention can operate on or within a number of different computer systems including general purpose networked computer systems, embedded computer systems, routers, switches, server devices, client devices, various intermediate devices/nodes, stand alone computer systems, and the like. Additionally, computer system 100 of Figure 1 is well adapted having computer readable media such as, for example, a floppy disk, a compact disc, and the like coupled thereto. Such computer readable media is not shown coupled to computer system 100 in Figure 1 for purposes of clarity. Additionally, portions of the present embodiment are well suited to operating in conjunction with various mobile clients such as, for example, a cell phone, personal digital assistant (PDA), laptop computer, pager, and the like.

System 100 of Figure 1 includes an address/data bus 102 for communicating information, and a central processor unit 104 coupled to bus 102 for processing information and instructions. Central processor unit 104 may be an 80x86-family microprocessor. System 100 also incudes data storage features such as a computer usable volatile memory 106, e.g. random access memory (RAM), coupled to bus 102 for storing information and instructions for central processor unit 104, computer usable non-volatile memory 108, e.g. read only memory (ROM), coupled to bus 102 for storing static information and instructions for the central processor unit 104, and a data storage unit 110 (e.g., a magnetic or optical disk and disk drive) coupled to bus 102 for storing information and instructions. System 100 of the present invention also includes an optional alphanumeric input device 112 including alphanumeric and function keys coupled to bus 102 for communicating information and command selections to central processor unit 104. System 100 also optionally includes an optional cursor control device 114 coupled to bus 102 for communicating user input information and command selections to central processor unit 104. System 100 of the present embodiment also includes an optional display device 116 coupled to bus 102 for displaying information.

Referring still to Figure 1, optional display device 116 of Figure 1, may be a liquid crystal device, cathode ray tube, or other display device suitable for creating graphic images and alphanumeric characters recognizable to a user. Optional cursor control device 114 allows the computer user to dynamically signal the two dimensional movement of a visible symbol (cursor) on a display screen of display device 116. Many implementations of cursor control device 114 are known in the art including a trackball, mouse, touch pad, joystick or special keys on alphanumeric input device 112 capable of signaling movement of a given direction or manner of displacement. Alternatively, it will be appreciated that a cursor can be directed and/or activated via input from alphanumeric input device 112 using special keys and key sequence commands. The present invention is also well suited to directing a cursor by other means such as, for example, voice commands. A more detailed discussion of the present invention is found below.

### GENERAL METHOD AND SYSTEM FOR RELIABLY AND EFFICIENTLY STREAMING MEDIA TO FIXED AND/OR MOBILE CLIENTS

As an overview, the present invention provides a method and system for streaming media to fixed and/or mobile clients wherein the method and system achieve improved efficiency by using complementary information (as opposed to duplicate information employed in conventional approaches). The present invention further provides a method and system for streaming media to fixed and/or mobile clients wherein the method and system improve reliability by using various forms of diversity to prevent single points of failure.

For purposes of clarity and brevity, the following discussion and examples will specifically deal with video data. The present invention, however, is not limited solely to use with video data. Instead, the present invention is well suited to use with audio-based data, speech-based data, image-based data, web page-based data, graphic data and the like. Of course, buffering and downloading are allowed, and various degrees of buffering can be accommodated in this system; thus, this system supports both live and buffered media streams. Furthermore, note that all these media types can be coded with, the properties of multiple description bitstreams described herein.

One approach for reliably delivering streaming media is disclosed in WO 01/2273511, entitled "Video Communication Using Multiple Streams". Another approach for reliably delivering streaming media is disclosed in commonly-owned, co-pending U.S. Patent Application 2002/0114332A1, entitled. "Method and. System for Packet Communication Employing Path Diversity" filed January 19, 2001 to J. G. Apostolopoulos et al. Yet another approach for reliably delivering streaming media is disclosed in commonly-owned, co-pending U.S. Patent Application 2002/0116715 A1, entitled "Video Communication System Employing Multiple State Encoding and Path Diversity", filed January 19, 2001 to J. G. Apostolopoulos. These patent applications relate to a system for reliable video communication over lossy packet networks while preserving high compression efficiency. Portions of the prior work were composed of two systems: (1) a multiple description video coding system, and (2) a path diversity transmission system.

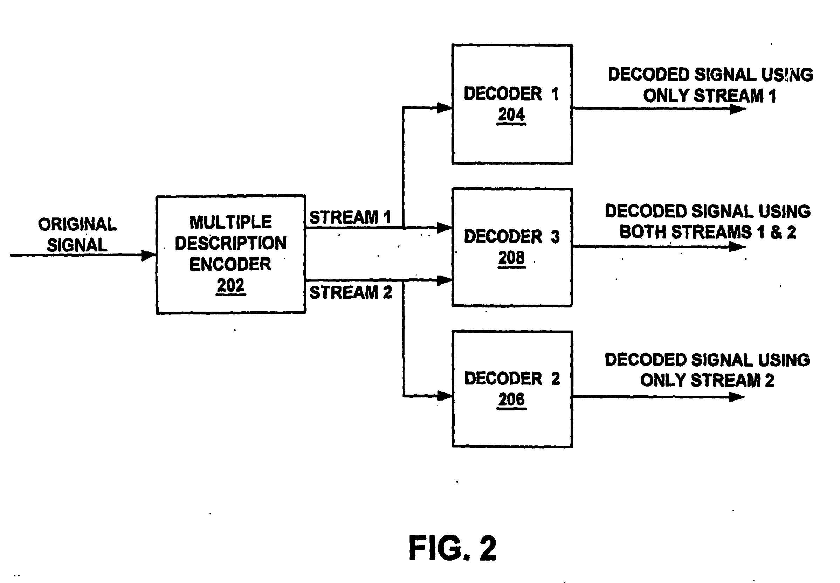

With reference now to Figure 2, a schematic diagram illustrating multiple description coding of media data as employed in conjunction with various embodiments of the present invention is shown. Multiple Description Coding (MDC) refers to one form of compression where the goal is to code an incoming signal into a number of separate bitstreams, where the multiple bitstreams are often referred to as multiple descriptions. These separate bitstreams have the property that they are all independently decodable from one another. Specifically if a decoder receives any single bitstream it can decode that bitstream to produce a useful signal (without requiring access to any of the other bitstreams). MDC has the additional property that the quality of the decoded signal improves as more bitstreams are accurately received. For example, assume that a video is coded with MDC into a total of N streams. As long as a decoder receives any one of these N streams it can decode a useful version of the video. If the decoder receives two streams it can decode an improved version of the video as compared to the case of only receiving one of the streams. This improvement in quality continues until the receiver receives all N of the streams, in which case it can reconstruct the maximum quality. As shown in Figure 2, a multiple description encoder 202 codes an original signal into two streams, referred to as stream 1 and stream 2. In the example of Figure 2, there are three decoders 204, 206, and 208. Each of decoders 204, 206 and 208 receive different bitstreams. Decoder 1204 receives only stream 1 and decodes that stream to produce usable video. Decoder 2 206 receives only stream 2 and decodes that stream to produce usable video. Decoder 3 208 receives both stream 1 and stream 2 and decodes both streams to produce higher quality video that either decoder 1 204 or decoder 2 206.

There is a critical difference between the present multiple description based approach for streaming media delivery and prior approaches, such as scalable or layered coding approaches for streaming media delivery. Namely, in scalable or layered coding the video is also coded into multiple bitstreams, however one bitstream, referred to as the baselayer bitstream, is critically important and must be correctly received in order to produce a usable decoded media stream. Specifically, in the conventional scalable or layered approaches for streaming media delivery, even if all the bitstreams except the baselayer bitstream are correctly received, they are essentially useless unless the baselayer bitstream is correctly received creating a single point of failure. The present multiple description based streaming media delivery does not have this problem since as long as any multiple description bitstream is received it can be decoded to produce usable quality video, and as more multiple description bitstreams are received the quality of the decoded video increases.

There are a number of different approaches to achieve MDC coding of video. One approach is to independently code different frames into different streams. For example, each frame of a video sequence may be coded as a single frame (independently of the other frames) using only intra frame coding, e.g. JPEG, JPEG-2000, or any of the video coding standards (e.g. MPEG-1/2/4, H.261/3) using only I-frame encoding. Then different frames can be sent in the different streams. For example, all the even frames may be sent in stream 1 and all the odd frames may be sent in stream 2. Because each of the frames is independently decodable from the other frames, each of the bitstreams is also independently decodable from the other bitstream. This simple form of MDC video coding has the properties described above, but it is not very efficient in terms of compression because of the lack of inter-frame coding.

A preferred embodiment of MDC video coding that provides the above properties and achieves high compression is given in the prior patent. This MDC video coding system does not require a back-channel and therefore can be applied in a wide variety of applications (e.g. broadcast or multicast). In addition, it has the attractive property that it can be applied as a standard-compatible enhancement within MPEG-4 Version 2 (with NEWPRED) and H.263 Version 2 (with RPS). Therefore any MPEG-4 Version 2 decoder can decode the resulting bitstream while an enhanced decoder designed to perform state recovery as presented in the prior patent can provide improved error recovery. This preferred embodiment of MDC video coding is assumed through the following discussion. However, a different video compression algorithm that has the same MDC properties as discussed above may also be used in its place.

Following is a discussion of path diversity as employed in conjunction with various embodiments of the present invention. Consider the case of multimedia communication over a packet network such as the Internet. Communication over the Internet is often hampered by congestion and packet loss. An important observation is that while one node or path in the network may be congested, other nodes or paths may have ample bandwidth. It would be advantageous to know the instantaneous quality of each path and to use that information to send packets along the "best" path (much like listening to a traffic report before leaving for work). However this is very difficult for a number of reasons, including the fact that the congested areas can vary quite rapidly.

While it may not be possible to know which paths are the best to use at any point in time, through appropriate system design one can still achieve significant performance improvements. Various embodiments of the present invention employ a path diversity system which explicitly sends different subsets of packets for an application over different paths, as opposed to the default scenario where the stream of packets proceeds along a single path. By using multiple paths at the same time some amount of averaging occurs and the end-to-end application effectively sees an "average" path behavior. Generally, seeing this average path behavior provides better performance than seeing the behavior of any randomly chosen individual path. For example, the probability that all of the multiple streams that are transmitted on different paths are simultaneously congested and have losses is much less than the probability that a single path is congested. The benefits of path diversity include (1) the application sees a virtual average path which exhibits a smaller variability in communication quality than exists over an individual path, (2) burst packet losses are converted to isolated packet losses, and (3) the probability of an outage (where all packets in the packet stream are lost for the duration of the outage) is greatly reduced. These advantages provide some important benefits to multimedia communication performance under packet loss. As will be discussed in detail below, the various embodiments of the present invention routes MDC traffic through semi-intelligent nodes at strategic locations in the Internet, thereby providing a service of improved reliability while leveraging the infrastructure of the Internet.

Path diversity may also exist in wireless networks. Various embodiments of the present invention employ a soft-handoff system in which a mobile client can simultaneously communicate with multiple base stations. In such cases, the benefits of path diversity mentioned above are also realized in a wireless environment.

Additionally, the MD video coding and path diversity employed in conjunction with the various embodiments of the present invention are useful even if used separately. For example, MD video coding can provide improved reliability even when sent over a single path. Similarly, path diversity provides a virtual channel with improved characteristics, enabling a simpler system design. However, when used together, MD video coding and path diversity complement, and also to a certain extent enhance, each other's capabilities. MD video coding provides multiple independently decodable bitstreams, which the transmission system explicitly sends over different paths, and the transmission system provides the video decoder with a high probability that at least one of the streams will be received correctly at any point in time. In one preferred embodiment of MD video coding, this enables the video decoder to perform state recovery to recover a corrupted stream.

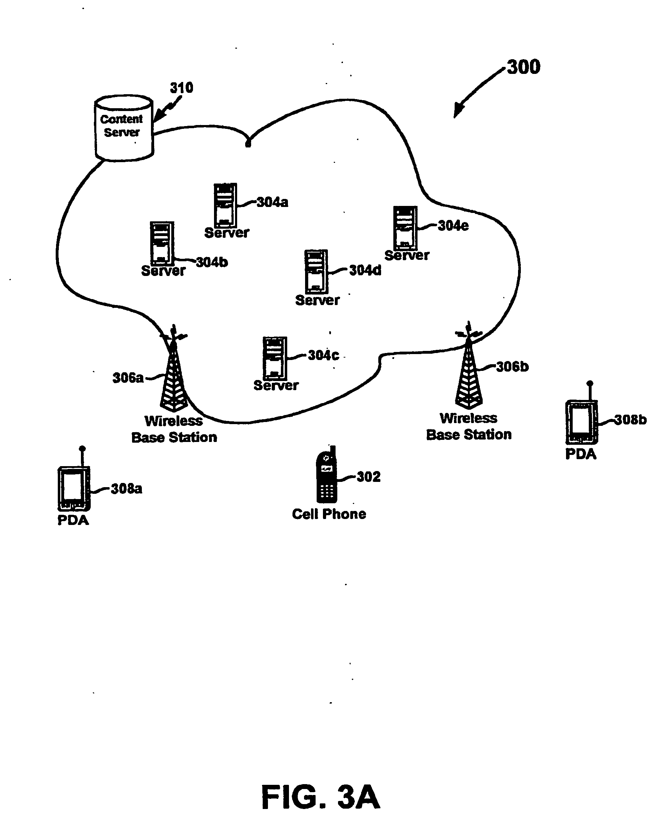

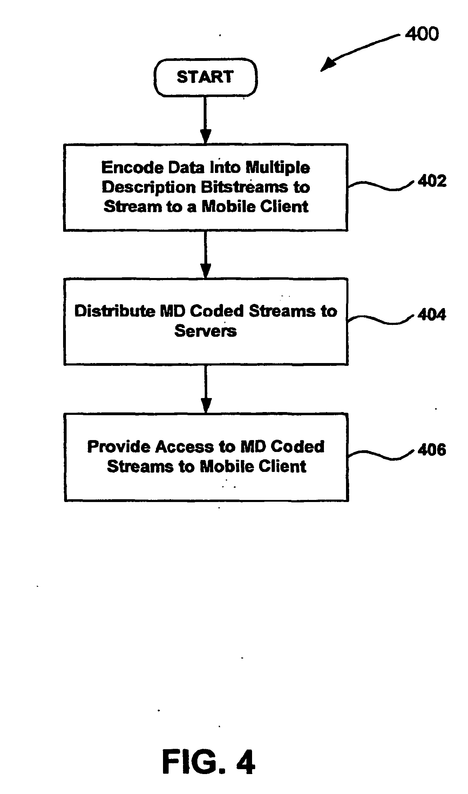

With reference next to Figure 3A and flow chart 400 of Figure 4, exemplary steps used by the various embodiments of present invention are illustrated. Flow chart 400 includes processes of the present invention which, in one embodiment, are carried out by a processor under the control of computer-readable and computer-executable instructions. The computer-readable and computer-executable instructions reside, for example, in data storage features such as computer usable volatile memory 106, computer usable non-volatile memory 108, and/or data storage device 110 of Figure 1. The computer-readable and computer-executable instructions are used to control or operate in conjunction with, for example, central processing unit 104 of Figure 1.

With reference again to Figure 3A, a system 300 that delivers streaming media to mobile clients over hybrid wired/wireless networks in accordance with one embodiment of the present invention is shown. In one embodiment, system 300 consists of one or more servers (304a-304e), one or more wireless base stations (306a and 306b), and one or more mobile clients (e.g. cellphone 302 and/or personal digital assistants (PDAs) 308a and 308b) as shown in Figure 3A. The system of the present invention may include a greater or lesser number of components than are specifically illustrated in the embodiment of Figure 3A. As an example, although not always required, a content server 310 also forms a portion of the system of the embodiment of Figure 3A. Importantly, in the following discussion, the term "server" is in various embodiments is intended to encompass a device functionally resembling a computer (e.g. having computation ability, memory, and/or connectivity capability). A typical server according to the definition as used in the present application may include, but is not limited to, any computer (e.g. mainframe, corporate server, personal computer (PC), laptop, personal digital assistant (PDA), and the like). In various other embodiments of the present invention, the term "server" is intended to encompass a device not typically considered a computer but having similar capabilities. In such an embodiment, the server is comprised, for example, of an advanced cell phone.

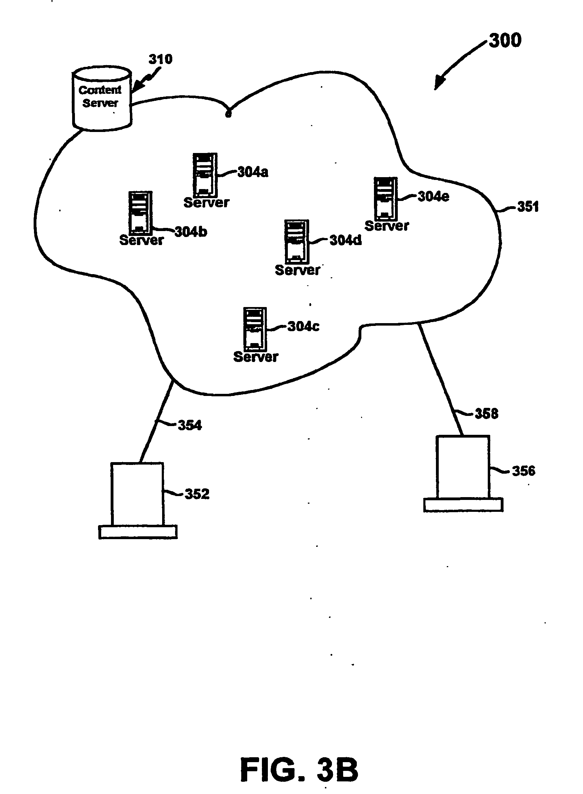

Importantly, it should be noted that the methods of various embodiments of the present invention are applicable with fixed wired clients and/or mobile wireless clients. Specifically, the mobile client case is a more general and superset version of the fixed client case. For example, in the mobile client case, the MD bitstreams are provided by a server or servers to a mobile client through one or more base stations. In contrast, the corresponding fixed (wired) client case would have the server or servers instead provide the MD bitstreams directly to the fixed client without the need for a base station. Therefore, in the following discussion, will specifically discuss the more general and superset mobile client case. For purposes of brevity and clarity, redundant examples of fixed client cases are not presented herein. It will be understood by one of ordinary skill in the art, however, that in an example in which MD bitstreams are provided by a server or servers to a mobile client by one or more base stations, in the fixed client case the server or servers would instead provide the MD bitstreams to the fixed client without the need for a base station. With reference now to Figure 3B, a system 350 that delivers streaming media to fixed clients over a network (e.g. the Internet) in accordance with one embodiment of the present invention is shown. In one embodiment, system 350 consists of a one or more fixed clients (e.g. personal computers 352 and 356), one or more servers (304a-304e), a content server 310. In the present embodiment fixed client 352 is coupled to network 351 via a wired link 354. Similarly, fixed client 356 is coupled to network 351 via a wired link 358. The system of the present invention may include a greater or lesser number of components than are specifically illustrated in the embodiment of Figure 3B. As an example, although not always required, content server 310 also forms a portion of the system of the embodiment of Figure 3B. As mentioned above, in the following discussion, the term "server" is in various embodiments intended to encompass a device functionally resembling a computer (e.g. having computation ability, memory, and/or connectivity capability). A typical server according to the definition as used in the present application may include, but is not limited to, any computer (e.g. mainframe, corporate server, personal computer (PC), laptop, personal digital assistant (PDA), and the like). In various other embodiments of the present invention, the term "server" is intended to encompass a device not typically considered a computer but having similar capabilities. In such an embodiment, the server is comprised, for example, of an advanced cell phone.

Furthermore, it should be noted the present invention is well suited to use in any of a variety of wired and/or wireless networks, and also in the various combinations thereof. For example, embodiments of the present invention are well suited to use in: wired and wired networks (e.g. a wired network infrastructure also having a wired connection to the client); wired and wireless networks (e.g. a wired network infrastructure having a wireless connection to the client); wireless and wired networks (e.g. a wireless network infrastructure having a wired connection to the client); and wireless and wireless networks (e.g. a wireless network infrastructure also having a wireless connection to the client). More specifically, the methods of the present invention are also applicable if all of the links are wireless, as in the case of an ad-hoc wireless network where some of the nodes are acting as servers and others as clients. Note that a node may act as both a server (source of information) and a client (sink of information) at the same time. An interesting example of this later case is when each node is a laptop or PDA with a wireless connection. Also note that each cell phone may act as both a sender and receiver of MD streams in a wireless/wired/wireless situation.

Referring now to Figures 3A and 3B, in following discussions in which, for example, MD bitstreams are provided by a server or servers to a mobile client through one or more base stations (as shown in Figure 3A), the corresponding fixed client case would have the server or servers instead provide the MD bitstreams to the fixed client without the need for a base station. Hence, it can be seen that the below recited mobile client-based examples and discussions are applicable as well to fixed client systems. That is, the following mobile client-based examples and discussions are not intended to limit the present invention to applicability only in mobile client systems.

With reference now to flow chart 400 of Figure 4, steps performed in accordance with one embodiment of the present invention are shown. Although specific steps are disclosed in flow chart 400 of Figure 4, such steps are exemplary. That is, the present invention is well suited to performing various other steps or variations of the steps recited in Figure 4. At step 402, the present embodiment encodes data to be streamed to a mobile client into two or more MD streams. In one embodiment, the data to be streamed is comprised of a video sequence. As mentioned above, MD streams have the property that any subset of them can be decoded into a media stream whose quality depends on the number of decoded streams. In the present embodiment, this encoding may be done in real time or it may be done in advance in which case the pre-computed MD streams are stored on a content server (e.g. content server 310 of Figure 3).

Referring still to step 402, in the present embodiment, the present invention uses specially designed multiple description media streams which contain complementary information (as opposed to duplicating the information). Specifically, the original media stream is coded using a multiple description algorithm into a number of separate descriptions or bitstreams. These descriptions have the property that (1) each bitstream is independently useful to the client, and (2) each bitstream contains complementary information. For example, consider the case of multiple description coding with two descriptions. As long as the receiver receives either of the bitstreams, it can decode a usable media stream. If the receiver receives both bitstreams it can decode a higher quality media stream than if it had received either bitstream alone. In addition, the MD streams provide these properties while requiring only slightly higher total bit rate than that required by a conventional coding algorithm that does not provide these properties. Additionally, an important point is that each description or MD bitstream is equally important. This is in contrast to conventional scalable schemes, where the base-layer bitstream is critically important. That is, in conventional scalable schemes, if the base-layer bitstream is lost the other bitstream(s) are useless. Specifically, since each MD bitstream is equally important in the present embodiment, there is no single point of failure in the sense that there is no single bitstream that must be received.

At step 404, the present embodiment then distributes the MD streams to a number of different servers (e.g. servers 304a-304e of Figure 3) placed at intermediate nodes throughout a network. By, appropriately distributing the MD streams, the present invention eliminates the possibility that any single fault may render all streams useless. In one embodiment, the present invention uses servers that are placed at intermediate nodes in the network, for example alongside a router or a wired/wireless gateway. In the present embodiment, servers 304a-304e send the MD streams to nearby wireless base stations 306a and 306b as mobile clients 302, 308a, and 308b roam through their coverage areas. Wireless base stations 306a and 306b receive data from the wired network and wirelessly transmit this data to mobile clients 302, 308a and 308b. Likewise, wireless base stations 306a and 306b wirelessly receive data from mobile clients 302, 308a and 308b and transmit this data to the wired network. Thus, wireless base stations 306a and 306b can be viewed as having a wired/wireless gateway and a wireless transmitter/receiver. Furthermore, as will be described in detail below, the various embodiment of the present invention overcome the non-guaranteed, best-effort nature of existing networks by dynamically delivering MD streams to mobile users from the most accessible servers based on user mobility, network congestion, and server load.

With reference still to step 404, the present invention ensures that no single fault causes the loss of all streams. In the context of the above example, a video sequence media stream may be coded into two MD streams which are then placed at two different storage modules, connected to two different servers at two different locations in the network. In so doing, the two MD streams can be sent over two different paths in the wired network, and two different base stations may transmit the two MD streams over two different wireless channels to the receiving client. In this manner, the present embodiment achieves a level of diversity which eliminates many potential single points of failure.

Referring now to step 406, the present embodiment provides access to the MD coded streams for a mobile client. That is, the MD streams are accessible to, for example, a requesting cell phone, PDA, laptop computer, or other such mobile client.

Referring again to steps 402, 404 and 406, a detailed example (using Figure 3 for illustration) is provided below of the operation of the present embodiment. In the present example, a video sequence media stream has previously been coded into two MD streams which were then both stored on content server 310. The first of the two MD streams is placed at a first storage module, coupled to server 304a. The second of the two MD streams is placed at a second storage module coupled to server 304e. When the video sequence media stream is requested, for example, by cell phone 302, the first of the two MD streams is sent over a first path to cell phone 302, and the second of the two MD streams is sent over a second path to cell phone 302. In the present example, the first path comprises transmission over a wired network connection from server 304a ultimately to wireless base station 306a, and then wirelessly transmitting the first MD stream of the requested video sequence from wireless base station 306a to cell phone 302. Furthermore, in the present example, the second path comprises transmission over a wired network connection from server 304e ultimately to wireless base station 306b, and then wirelessly transmitting the second MD stream of the requested video sequence from wireless base station 306b to cell phone 302. The MD streams of the present embodiment have the property that any number of streams can be decoded into a sequence in which the quality of the decoded sequence depends on the number of decoded MD streams. Specifically, any one MD stream can be decoded into baseline quality data; any two MD streams can be decoded into improved quality data; and so on until finally all the MD streams can be decoded into the highest quality data. Thus, should one of the paths fail in the preceding example (e.g. the second path), cell phone 302 is still able to receive and utilize the requested video sequence based solely on receiving only one of the MD streams.

Although such first and second paths are recited in the present example, the present invention is well suited to use with the numerous paths which can be constructed within, for example, the network of system 300. Additionally, although two MD streams are recited in the present description, the present invention is well suited to use with more than two MD streams of data. Thus, the present embodiment, composed of multiple description coding and system diversity, provides improved system reliability in a more efficient manner than the conventional approach of resource duplication. Furthermore, the proposed system enables the elimination of a number of single points of failure that afflict conventional systems. Also, as mentioned above, for purposes of clarity and brevity, the above and following discussion and examples may specifically deal with video data. The present invention, however, is not limited solely to use with video data. Instead, the present invention is well suited to use with audio-based data, speech-based data, image-based data, graphic data, web page-based data, and the like.

Thus, the present invention provides a method and system for streaming media to fixed clients and/or mobile clients. The present invention further provides a method and system for streaming media to fixed clients and/or mobile clients wherein the method and system provides increased reliability and efficiency over conventional systems.

Furthermore, the multiple description bitstreams may be placed on servers in a variety of ways depending on the specific situation. For example, some servers may store all of the descriptions, while other servers may store only a subset of the descriptions. An example of the former is a central server which has high connectivity to a large number of clients, it may store all of the descriptions and adaptively choose to transmit a specific subset of the descriptions to each specific client based on the client's particular situation (e.g. the other servers that the client is connected to and the descriptions that these other servers can provide). On the other hand there may be other servers for which only a subset of the descriptions are stored, for example only the first description may be stored on some servers and the second description may be stored on other servers. The strategy for distributing descriptions to different servers may depend on a number of factors such as each server's compute and storage capabilities, its connectivity, typical network conditions, disjointness of paths, and the popularity of the specific media to be delivered.

When coding a specific media sequence, the media may be coded into multiple descriptions where each description requires the same bit rate and provides approximately the same quality. This may be referred to as balanced multiple description coding. Alternatively, the media may be coded into multiple descriptions where each description may require a different bit rate and may provide a different quality. This may be referred to as unbalanced multiple description coding. Coding a media into unbalanced multiple descriptions is important in situations where unbalanced operation is required, e.g. when one has unbalanced storage available at different servers or unbalanced available bandwidths on different paths. For both balanced and unbalanced multiple description coding, the key property is that as long as the client receives any subset of the multiple descriptions it can produce a usable decoded media stream, and that as it receives more descriptions the quality of the decoded media stream would increase.

A media sequence may be initially coded into balanced multiple description bitstreams, where each bitstream requires approximately the same bit rate, and these multiple descriptions streams may be appropriately placed at different servers in the network. These MD bitstreams may be subsequently transcoded to different lower bit rates in order to appropriately match the bandwidths available to a client at any particular time. For example, if a specific client requires unbalanced operation, e.g. if there are two paths available to the client and the available bandwidth of each path is different, the servers can transcode the multiple description bitstreams to the appropriate bit rates available on each path. Furthermore, the available bit rate along a specific path may vary as a function of time, and the server responsible for delivering the multiple description bitstream along that path can then appropriately transcode the bitstream to match the available bit rate on that path as a function of time. In this manner, the system can efficiently use the available bandwidth to maximize the reconstructed quality at the client.

The distribution of multiple description bitstreams to different servers, as well as the assignment of different servers to transmit different MD bitstreams to a specific client, depends on a number of factors including: demand on each server, available bandwidth and loss along the path from each server to the client, and the disjointness of the multiple paths.

The issue of disjointness does not arise in prior work since conventional approaches transmit a single bitstream along a single path. In the proposed approach multiple bitstreams are explicitly transmitted along multiple paths, and it is desired that these multiple paths be as disjoint as possible in order to minimize the probability that a single fault may lead to the loss of all of the multiple descriptions. For example, in the case of two MD bitstreams, each stream is sent over a separate path from a server to the client. Each of these paths consists of a sequence of links, and these two paths may include a number of shared links as well as a number of links that are not shared. Shared links are referred to as joint links and unshared links are referred to as disjoint links. Ideally, all of the links on the two paths are disjoint. However, in practice this may sometimes not be possible. The primary goal is to minimize the number of lossy joint links. For example, if an approximately lossless backbone link is joint or shared by both paths it will not effect the communication quality since the link is lossless. However, a lossy joint link can have a detrimental effect on the performance of the system since any losses, e.g. produced by congestion, may lead to the loss of both descriptions. Therefore, given a particular client, the system carefully chooses two servers to send the two multiple descriptions to the client such that these servers have maximally disjoint paths between them and the client. Furthermore, to distribute MD streams on a set of servers, the anticipated location of clients as well as the connectivity between each server and the anticipated clients are taken into account in order to determine the distribution that would enable the maximally disjoint paths between servers and anticipated clients. Of course, other more conventional metrics such as available bandwidth and losses on each link are also taken into account in this optimization. These conventional metrics are not discussed as they are also used in conventional systems.

## Claims

1. A method (400) for streaming media data to a client (302,308a, 308b), said method comprising the steps of :
a) encoding said media data to be streamed to said client(302, 308a, 308b) into a first and second complementary multiple description bitstream wherein each of said first and second complementary multiple description bitstreams (stream 1, stream 2) is independently useful to said client, and wherein each of said first and second complementary multiple description bitstreams contains complementary information; and
b) distributing said first and second complementary multiple description bitstreams to a plurality of servers (304a-304e) placed at intermediate nodes throughout a network (404), such that said client is provided with access to said media data via a plurality of transmission paths (406)
wherein said complementary multiple description bitstreams are distributed among said plurality of servers such that a first server stores all complementary multiple description bitstreams and that a second server only stores a subset of the complementary multiple description bitstreams, and
wherein the first server selects a specific subset of the complementary multiple description bitstreams for transmission to the client based on the subset of complementary multiple description bitstreams which is stored on the second server and can be provided to the client from the second server.

2. The method for streaming media data to a client as recited in Claim 1, wherein said first and second complementary multiple description bitstreams (stream 1, stream 2) are of substantially equal importance.

3. The method for streaming media data to a client as recited in Claim 1 or 2, wherein said media data to be streamed to said client (302,308a, 308b) is selected from the group comprising audio-based data, speech-based data, image-based data, graphic data, and web page-based data.

4. The method for streaming media data to a client as recited in Claim 1, wherein said client (302,308a, 308b) is a mobile client.

5. The method for streaming media data to a client as recited in Claim 4, wherein said step b) comprises: distributing said first and second multiple description bitstreams (stream 1, stream2) to servers (304a-304e) placed along a wired/wireless gateway.

6. The method for streaming media data to a client as recited in Claim 1, wherein said method is performed in a network system selected from the group comprising: wired (350) and wired (350) networks; wired (350) and wireless (300) networks; wireless (300) and wired (350) networks; and wireless (300) and wireless (300) networks.

## Patentansprüche

1. Ein Verfahren (400) zum strömungsmäßigen Übertragen von Mediendaten zu einem Client (302, 308a, 308b), wobei das Verfahren folgende Schritte aufweist:
a) Codieren der Mediendaten, die strömungsmäßig zu dem Client (302, 308a, 308b) übertragen werden sollen, in einen ersten und einem zweiten komplementären Mehrfachbeschreibungsbitstrom, wobei jeder des ersten und des zweiten komplementären Mehrfachbeschreibungsbitstroms (stream 1, stream 2) für den Client unabhängig nützlich ist und wobei jeder des ersten und des zweiten komplementären Mehrfachbeschreibungsbitstroms komplementäre Informationen umfasst; und
b) Verteilen des ersten und des zweiten komplementären Mehrfachbeschreibungsbitstroms auf eine Mehrzahl von Servern (304a-304e), die an Zwischenknoten über ein Netzwerk (404) hinweg platziert sind, derart, dass der Client mit einem Zugriff auf die Mediendaten über eine Mehrzahl von Übertragungswegen (406) versehen ist,
wobei die komplementären Mehrfachbeschreibungsbitströme unter der Mehrzahl von Servern verteilt werden, derart, dass ein erster Server alle komplementären Mehrfachbeschreibungsbitströme speichert und dass ein zweiter Server lediglich einen Teilsatz der komplementären Mehrfachbeschreibungsbitströme speichert, und wobei der erste Server einen spezifischen Teilsatz der komplementären Mehrfachbeschreibungsbitströme für eine Übertragung an den Client auswählt, basierend auf dem Teilsatz von komplementären Mehrfachbeschreibungsbitströmen, der auf dem zweiten Server gespeichert ist und der von dem zweiten Server an den Client geliefert werden kann.

2. Das Verfahren zum strömungsmäßigen Übertragen von Mediendaten zu einem Client gemäß Anspruch 1, bei dem der erste und der zweite komplementäre Mehrfachbeschreibungsbitstrom (stream 1, stream 2) von im Wesentlichen gleicher Wichtigkeit sind.

3. Das Verfahren zum strömungsmäßigen Übertragen von Mediendaten zu einem Client gemäß Anspruch 1 oder 2, bei dem die Mediendaten, die strömungsmäßig zu dem Client (302, 308a, 308b) übertragen werden sollen, aus der Gruppe ausgewählt sind, die audiobasierte Daten, sprachbasierte Daten, bildbasierte Daten, Graphikdaten und webseitenbasierte Daten aufweist.

4. Das Verfahren zum strömungsmäßigen Übertragen von Mediendaten zu einem Client gemäß Anspruch 1, bei dem der Client (302, 308a, 308b) ein mobiler Client ist.

5. Das Verfahren zum strömungsmäßigen Übertragen von Mediendaten zu einem Client gemäß Anspruch 4, bei dem der Schritt b) folgenden Schritt aufweist: Verteilen des ersten und des zweiten Mehrfachbeschreibungsbitstroms (stream 1, stream 2) an Server (304a-304e), die entlang einem verdrahteten/drahtlosen Netzübergang platziert sind.

6. Das Verfahren zum strömungsmäßigen Übertragen von Mediendaten zu einem Client gemäß Anspruch 1, wobei das Verfahren in einem Netzwerksystem durchgeführt wird, das aus der Gruppe ausgewählt ist, die Folgendes aufweist: verdrahtete (350) und verdrahtete (350) Netzwerke; verdrahtete (350) und drahtlose (300) Netzwerke; drahtlose (300) und verdrahtete (350) Netzwerke; und drahtlose (300) und drahtlose (300) Netzwerke.

## Revendications

1. Procédé (400) pour diffuser en flux continu des données de transmission en continu vers un client (302, 308a, 308b), ledit procédé comprenant les étapes consistant à :
a) coder lesdites données de transmission en continu devant être diffusées en flux continu vers ledit client (302, 308a, 308b) en un premier et second train binaire à descriptions multiples complémentaires, dans lequel chacun desdits premier et second trains binaires à descriptions multiples complémentaires (train 1, train 2) est utile individuellement audit client, et dans lequel chacun desdits premier et second trains binaires à descriptions multiples complémentaires contient des informations complémentaires ; et
b) distribuer lesdits premier et second trains binaires à descriptions multiples complémentaires vers une pluralité de serveurs (304a-304e) placés au niveau de noeuds intermédiaires dans un réseau (404), de sorte que ledit client ait accès auxdites données de transmission en continu par l'intermédiaire d'une pluralité de chemins de transmission (406) dans lequel lesdits trains binaires à descriptions multiples complémentaires sont distribués entre ladite pluralité de serveurs de sorte qu'un premier serveur stocke tous les trains binaires à descriptions multiples complémentaires et qu'un second serveur stocke uniquement un sous-ensemble des trains binaires à descriptions multiples complémentaires, et
dans lequel le premier serveur sélectionne un sous-ensemble spécifique des trains binaires à descriptions multiples complémentaires pour la transmission vers le client
sur la base du sous-ensemble de trains binaires à descriptions multiples complémentaires qui est stocké sur le second serveur et peut être fourni au client à partir du second serveur.

2. Procédé pour diffuser en flux continu des données de transmission en continu vers un client selon la revendication 1, dans lequel lesdits premier et second trains binaires à descriptions multiples complémentaires (train 1, train 2) ont une importance sensiblement égale.

3. Procédé pour diffuser en flux continu des données de transmission en continu vers un client selon la revendication 1 ou 2, dans lequel lesdites données de transmission en continu devant être diffusées en flux continu vers ledit client (302, 308a, 308b) sont sélectionnées dans le groupe composé de données audio, de données vocales, de données d'image, de données graphiques et de données de pages Web.

4. Procédé pour diffuser en flux en continu des données de transmission en continu vers un client selon la revendication 1, dans lequel ledit client (302, 308a, 308b) est un client mobile.

5. Procédé pour diffuser en flux continu des données de transmission en continu vers un client selon la revendication 4, dans lequel ladite étape b) comprend: la distribution desdits premier et second trains binaires à descriptions multiples (train 1, train 2) vers des serveurs (304a-304e) placés le long d'une passerelle filaire/sans fil.

6. Procédé pour diffuser en flux continu des données de transmission en continu vers un client selon la revendication 1, dans lequel ledit procédé est effectué dans un système de réseau sélectionné dans le groupe composé de : réseaux filaire (350) et filaire (350) ; réseaux filaire (350) et sans fil (300) ; réseaux sans fil (300) et filaire (350) ; et réseaux sans fil (300) et sans fil (300).
